# EUROPEAN PATENT APPLICATION

(11) **EP 1 495 794 A1**
(43) Date of publication of application: **12.01.2005**
(21) Application number: 03712141.5
(22) Date of filing: 14.03.2003
(51) Int. Cl.: B01D 53/62, B01D 53/74

(54) **COMBUSTION METHOD WITH INTEGRATED CO SB 2 /SB SEPARATION BY MEANS OF CARBONATION**

(30) Priority: 22.03.2002 ES 200200684
(71) Applicant: CONSEJO SUPERIOR DE INVESTIGACIONES CIENTIFICAS, 28006 Madrid (ES); Cranfield University, Cranfield, Bedfordshire MK43 0AL (GB)
(72) Inventor: ABANADES GARC A, Juan Carlos, Insto. Carboquimica, 50015 ZARAGOZA (ES); OAKEY, John, Cranfield, Bedfordshire MK43 OAL (GB)
(74) Representative: Ungria Lopez, Javier
(86) International application number: PCT/ES2003/000118
(87) International publication number: WO 2003/080223

(57) **Abstract**

The invention relates to a method for separating CO₂ from combustion gases, which can be used at areas with large emissions (thermal power stations using any carbonaceous fuel). The separated CO₂ stream can be used and/or contained in geological formations. The inventive method aims to reduce the high costs involved in CO₂ separation which prevent large-scale use of the CO₂ confinement options included in the UN's IPCC reports. Said method consists of bringing the combustion gases into contact with a calcareous sorbent (limestone, calcined dolomite) at 650-750°C, thereby producing the CO₂ capture reaction by means of the rapid carbonation of the sorbent. The sorbent is regenerated in another reactor (calciner) which operates in CO₂ or CO₂/H₂O atmospheres.

## Description

### TECHNICAL FIELD

Energy sector. Large scale process for generating electricity and/or heat with integrated CO₂ separation from the combustion gases.

### PRIOR ART

The UN's International Panel for Climate Change (IPCC, 2001) considers the capturing of CO₂ generated from large stationary sources and its subsequent containment in a variety of geological formations as a very interesting middle and long-term option. Use of these technologies require previous obtainment of a highly concentrated stream of CO₂ (Herzog et al., 1997). The CO₂ content of the combustion gases in different types of thermal power stations varies between 3 and 17% by volume, which makes a previous separation stage necessary.

There are a variety of commercial methods for CO₂ separation in the oil industry, natural gas industry and chemistry in general, mainly based on low temperature absorption processes, but use thereof for separating CO₂ from combustion gases coming from a thermal power station has big limitations (Herzog et al., 1997): the huge amounts of gas to be treated require large-size and very costly installations, require a large amount of energy to regenerate the sorbent which reduces the yields in generating useful electricity and/or heat and the pollutants in the fuel (SO₂, NOₓ) tend to damage the absorbent which creates high operating costs. For this reason, various new methods have been proposed for generating electric energy in thermal power stations more economically by including the CO₂ separation before, during or after combustion (Herzog, et al, 1997.) All of them are non-commercial methods which are still under development. The ones that are considered as most competitive are the ones based (Herzog et al., 1997) on combustion of the fuel in mixtures of CO₂/O₂, after separation of the air into its components; and the ones based on different stages of reforming the fuel with water and pressurized CO₂ separation by commercial physical absorption or membrane methods (Herzog et al., 1997). Intense research is also being done on optimizing low temperature absorption methods at the conditions present in a combustion gas (Herzog et al. (1997).

The method proposed in this invention differs from said proposals and attempts to make use of the equilibrium:

CaO+CO₂=CaCO₃ (1)

for separating CO₂ from combustion gases. This equilibrium has already been used previously in methods of separating CO₂ in the reforming of hydrocarbons and/or production of H₂. (Gorin et al. 1963, 1980) have patented and carried out on a demonstrative scale methods based on CO₂ "acceptors" that use the previous equilibrium. Lopez Ortiz and Harrison (2001) have also studied the use of the equilibrium (1) for the production of hydrogen in a single reactor starting from methane and steam and have a good number of patents and references in this field of CO₂ separation in reducing environments, that date back to 1868.

Shimizu et al. (1999) propose for the first time use of the equilibrium (1) for separating CO₂ from combustion gases. They suggest contacting CaO with the combustion gases of a thermal power station at temperatures around 600°C to carry out the capture of CO₂ by means of the carbonation reaction. The partially carbonated solids are regenerated in a fluidized bed reactor where they are calcined at temperatures higher than 950°C, burning part of the fuel in the presence of O_{2/}CO₂. The O₂ necessary for calcination comes from an air separating plant. The authors claim with this method a large saving in the air separating plant with respect to the use of O₂/CO₂ mixtures for all the fuel (technology described, among others in Herzog et al., 1997). However, the air separating plant is still necessary in the method described by Shimizu et al. (1999). Besides, these authors ignore the problems of degeneration (loss of CO₂ absorption capacity) of the sorbent described in the literature when it is calcined in atmospheres rich in CO₂ and at highly sintering temperatures of 950°C.

### References

Gorin, E; Retallick, W.B., Method for the production of hydrogen. US patent 1,938,202. 1963.

Gorin, E., Synthetic CO₂ acceptor and gasification process therewith. U.S. patent 4,191,538, March 4, 1980.

Herzog, H.; Drake, E.; Adams, E. CO₂ Capture, Reuse and Storage Technologies for Mitigating Global Climate Change - A White Paper; DOE 9 of 10 EST: What Future for Carbon Capture and Sequestration? Order No. DE-AF22-96PC01257; U.S. Government Printing Office: Washington, D.C., 1997, available at:
IPCC. "Climate Change 2001: Mitigation". Intergovernmental Panel on Climate Change, Technical Summary of the Working Group III Report. Filho et al. 2001, available at:
   Lopez Ortiz, A; Harrison D. P.; Hydrogen production using sorption-enhanced reaction. Ind. Eng. Chem. Res. 2001, 40, 5102-5109.
   Shimizu T., Hirama T., Hosoda H., Kitano K., Inagaki M., Tejima K: A twin fluid-bed reactor for removal of CO₂ from combustion processes *Trans IchemE*, 77, A, 1999

### DESCRIPTION OF THE INVENTION

It describes a new combustion method with integrated CO₂ separation by means of carbonation based on the use of part of the heat generated in the combustion chamber by the calciner in order to maintain the endothermic reaction of calcination and to regenerate the sorbent, without the need to use an air separating plant; in combination with a carbonator to treat the hot gases and which in turn generate energy during carbonation.

The object of the invention comprises a combustion chamber (1) wherein any type of fuel is burnt with air, preferably at temperatures higher than 1,000°C generating heat and a stream of combustion gases at a high temperature with a CO₂ content between 3 and 17% by volume depending on the fuel and the excess air used in the combustion. The combustion chamber may be of any type, a fluidized bed, a conventional powdered carbon combustion boiler, or natural gas burner or burner of other liquid fuels. Combustion can be done at atmpspheric pressure or at a high pressure.

The invention is based on the fact that part of the heat (Q) generated in (1) must be transferred to the calciner (2) in order to maintain the endothermic reaction of calcination and to regenerate the CO₂ sorbent (CaO).

The calciner (2) operates at temperatures lower than 900°C in atmospheres of pure CO₂ or of CO₂/H₂O. To reduce the calcination temperature and increase the temperature gradient between (1) and (2) the partial pressure of CO₂ in the calciner can be reduced by applying a certain vacuum to (2) and/or injecting steam into (2). The heat exchange between (1) and (2) may be direct through metal walls or indirect by means of using an inert solid (sand, alumina or others) that continuously circulate through (1) and (2) and that is easily separable from the active solids in CO₂ capture.

Heat is removed from gases G1 in order to condition them to a temperature (between 200 and 650°C) suitable for treatment thereof in the carbonator (3). Electricity can be generated with this heat removed from G1, and if the combustion in (1) is carried out under pressure, the combustion gases G1 can expand into a gas turbine in order to generate additional electricity.

The cooled combustion gases enter the carbonation unit (3) at atmospheric pressure. The carbonator may be of any type, such as a circulating, drawing, cyclonic fluidized bed depending on the size of the CaO particle and the reaction rate. The carbonation reaction is produced in the carbonator at 600-750°C and at atmospheric pressure, which are suitable conditions for a sufficiently rapid reaction between the CaO and the CO₂. This reaction is exothermic for which reason heat should be removed from (3) or the input temperature of G1 and/or of s2 must be adjusted below 550°C in order to maintain the reactor (3) at the desired temperature. The combustion gases G3, that leave the unit (3) at temperatures between 600-750°C contain a reduced amount of CO₂ (ideally close to the one of equilibrium at the operating temperature in (3)). The remaining CO₂ that was present in G1 is found in the form of CaCO₃ and leaves the calciner (3) in the solid stream s3, that contains the mixture of CaO and CaCO₃. The solid stream s3 is directed towards the calciner (2) in order to be regenerated as CaO and CO₂.

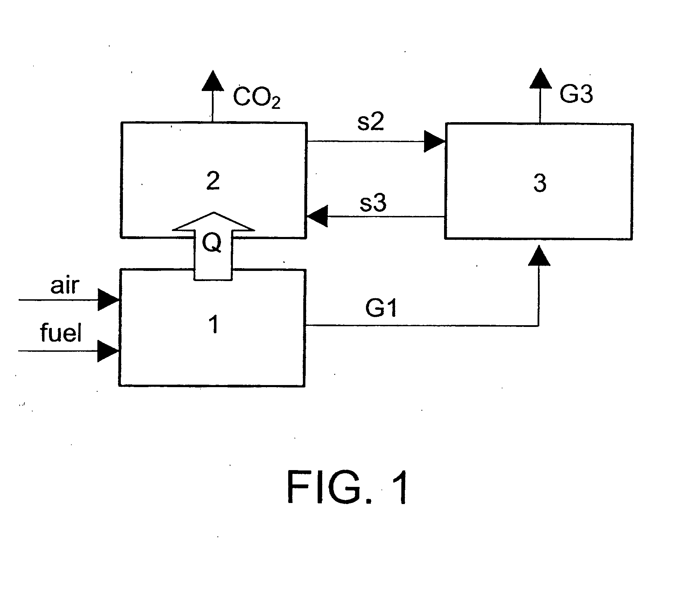

The calciner should be operated to generate a pure stream of CO₂ at a pressure lower than atmospheric pressure, or a mixture of CO₂/steam easily separable by condensation of the steam (not included in Figure 1 for the purpose of simplicity.) A stream of regenerated solids (s2) that mainly contain CaO, capable of recarbonating again in (3) leaves the calciner. Given that there will be losses of sorbent by internal sintering and/or attrition, it is necessary to add a flow of fresh sorbent to the calciner that is estimated between 2 and 5% of the amount of the flow of solids in s2, and that has not been included in Figure 1 for the purpose of simplicity. The calciner can be a fluidized bed to take advantage of high heat transmission coefficients. It may also be a drawn or pneumatic transported bed comprised of a bed of pipes through which the stream s3 is made to pass. The combustion atmosphere (1) would be outside the pipes with nominal flame temperatures that may be higher than 1,300°C.

The interconnections of units from the point of view of transfer of solids between the different units, as well as the separation of the solids from the gases that draw them, of the solids from each other - when they have very different particle sizes -, are done by means of equipment and processes that form part of the prior art regarding the gas/solid fluidized system technologies.

### BRIEF DESCRIPTION OF THE CONTENTS OF THE FIGURES

The object of the invention is shown schematically in figure 1. It comprises a combustion chamber (1) wherein the fuel is burnt with air at temperatures higher than 1,000°C generating heat and a stream of high temperature gases with a CO₂ content between 3 and 17% by volume depending on the fuel and the excess air used in combustion. The combustion chamber may be a fluidized bed, a conventional powdered carbon combustion boiler, or a natural gas burner or a burner of other liquid fuels. Combustion can be done at atmospheric pressure or at a high pressure. Part of the heat (Q) generated in (1) should be transferred to the calciner (2) in order to maintain the endothermic reaction of calcination and to regenerate the CO₂ sorbent (CaO). The calciner (2) operates at temperatures lower than 900°C in atmospheres of pure CO₂ or of CO₂/H₂O. In order to lower the calcination temperature and to increase the thermal gradient between (1) and (2) the partial pressure of CO₂ in the calciner can be reduced by applying a certain vacuum to (2) and/or injecting steam into (2). The heat exchange between (1) and (2) may be direct through metal walls or indirect by means of using an inert solid (sand, alumina or others) that continuously circulates between (1) and (2) and that is easily separable from the active solids in CO₂ capture. For the purpose of simplicity, this circulating stream of inert solids capable of transporting heat Q between (1) and (2) has not been drawn in Figure 1.

### EMBODIMENT OF THE INVENTION

The operating conditions in the different units are described as an example:
(1) the coal combustion chamber in a fluidized bed operating at 1,100°C. It could be another type of combustion chamber (gas or powder burners) with nominal flame temperatures higher than 1,300°C. It is supposed that there are no losses of heat and that the combustion of the fuel is complete.
(2) calciner operating as a fluidized bed at 850°C. It operates at a partial pressure of CO₂ of 0.3 atm by applying a vacuum and/or injecting a certain amount of steam. In these conditions, calcination of the solids with CaCO₃ (s3) is rapid and complete. The solids that leave the calciner (s3) only contain CaO in the example (although they may contain other inert materials if dolomites or other calcareous sorbents are used as CO₂ acceptors).
(3) with a circulating type fluidized bed operating at 650°C. Carbonation is very rapid, but limited to a certain conversion value (30% in the example) due to the internal sintering of the CaO. The average conversion chosen (30%) may be increased by increasing the flow of fresh sorbent that is added to (2). For the purpose of simplicity, this flow of fresh CaO, that will be limited in normal operating conditions to 2-5% of the total CaO circulating in s2, has been omitted.

The coal of the example has a heating capacity of 25 MJ/kg and a coal content of 65% by weight. For each 100 MW of power of the power station, 2.6 kg/s of °C in the form of CO₂ that are present in the stream of combustion gases G1 (15.4% vol. CO₂) are generated (20% excess air). In the example, an effectiveness in capturing the CO₂ in the combustion gases of 80% is sought, for which purpose, a total of 32.4 kg/s of CaO (stream s2 and s3) circulating between the calciner (2) and the carbonator is required. Only 30% thereof are carbonated in (3). The calculations have been done assuming a heating capacity of 900 J/kg for all the solid streams and of 1250 J/kg for all the gaseous streams. The reference temperature in the heat balances is 20°C. It is assumed that there are no heat losses in any of the units.

For each 100 MW that enter (1), 38.6 MW should be transferred to (2) in order to maintain calcination (9.4 for heating the solids s3 up to 850°C and 29.2 for the calcination reaction). 47.8 are recoverable from G1 as energy useful in, for example, a steam cycle to generate electricity, and the rest (13.6) leave the combustion chamber as heat sensible in the stream of combustion gases (G1) (at 270°C in the example) that is fed to the carbonator (3). The example has been designed so that the carbonator operates at autothermic conditions when the stream of combustion gases (G1 at 270°C) is put in contact with the solids s2 (from which 16.8 MS of useful heat have been removed to cool them, arbitrarily, at the same temperature of 270°C). Therefore, the 29.2 MW that are generated during the carbonation reaction manage to keep the carbonator temperature at 650°C. In the conditions of the example, 50.1 MW leave the carbonator as sensible heat of gases and solids at 650°C (27.4 MW as heat in the gases, from which useful heat can be removed in order to generate electricity in the steam cycle and 22.7 MW in the stream of solids s3). Therefore, 38.7 MW enter the calcinator (2) from the combustion chamber (1) and 22.7 MW from the carbonator, as sensible heat in the solids s3. Calcination is produced at 850°C absorbing 29.2 MW, and the rest is distributed in 24.2 MW in the solids s3 at 850°C (from which 16.8 MW of useful heat can be removed to cool them to 270°C) and 7.9 in the stream of CO₂ gas at 850°C, also recoverable in the steam cycle.

It is desired to point out that in the conceptual design described in the example an irreversible loss in the effectiveness of generation of electricity will be produced, associated to the necessary transfer of 38.6% of the energy that enters the combustion chamber (at 1,100°C) to another system at a lower temperature (the 850°C of the calcinator). However, in practical terms, the effectiveness of the generation of electricity by means of a steam cycle in the proposed cycle should be very similar to the original one (combustion at 1,100°C without capturing CO₂), by carrying out all the methods of separation and regeneration at high temperatures, from whose units energy can be recovered effectively in a steam cycle sufficiently optimized to the system object of the invention.

## Claims

1. Combustion method with integrated CO₂ separation by means of carbonation based on the use of part of the heat generated in the combustion chamber on the part of the calciner in order to maintain the endothermic reaction of calcination and regenerate the sorbent, that comprises any type of combustion chamber, wherein any type of fuel is burnt with air, without the need to use the separating plant, in combination with a carbonator to treat the hot gases and in turn generate energy.

2. Combustion method with integrated CO₂ separation by means of carbonation according to claim 1, **characterized in that** the heat exchange can be carried out directly through the metal walls that separate the combustion chamber (at temperatures higher than 1,000°C) from the calciner (at temperatures lower than 900°C).

3. Combustion method with integrated CO₂ separation by means of carbonation according to claim 1 **characterized in that** the heat exchange can be carried out indirectly by means of an inert solid (sand, alumina or others) circulating between the two chambers and, that is easily separable from the sorbent due to its different particle properties (density and/or size) in order to be able to operate continuously.

4. Combustion method with integrated CO₂ separation by means of carbonation according to claim 1 **characterized in that** the use of a calciner operating at partial CO₂ pressures below atmospheric pressure, producing a stream of pure CO₂ or CO₂ that can be easily purified, the low partial pressure of CO₂ permitting rapid calcination at moderate temperatures (equal to or lower than 900°C), with the subsequent improvement of the activity of the sorbent and increase of the impelling force (AT) of heat exchange towards the calciner, the partial pressures of CO₂ below atmospheric pressure are achieved by introducing steam (easily separable from the CO₂ generated in the calcination) and/or applying a vacuum to the calciner.

5. Combustion method with integrated CO₂ separation by means of carbonation according to claim 1, **characterized in that** the use of a powdered CaO and CO₂ carbonator, that may be a circulating fluidized bed, a drawn bed, or a cyclone reactor (depending on the size of the CaO particle and on the reaction rate) where there CaO carbonation reaction or the CO₂ capture is produced between 600-750°C.
